# EUROPÄISCHE PATENTSCHRIFT

(11) **EP 1 730 921 B1**
(45) Veröffentlichungstag und Bekanntmachung des Hinweises auf die Patenterteilung: **06.07.2016**
(21) Anmeldenummer: 05707794.3
(22) Anmeldetag: 18.01.2005
(51) Int. Cl.: H04L 29/06, H04L 12/58, H04L 29/08

(54) **VERFAHREN ZUM VERWALTEN VON PRESENZDATEN EINER GRUPPE VON TELEKOMMUNIKATONSTEILNEHMERN UND VORRICHTUNG ZUR DURCHFUEHRUNG DES VERFAHRENS**
METHOD FOR MANAGING PRESENCE DATA OF A TELECOMMUNICATIONS SUBSCRIBER GROUP AND DEVICE FOR CARRYING OUT SAID METHOD
PROCÉDÉ POUR GÉRER DES DONNÉES DE PRÉSENCE D'UN GROUPE D'ABONNÉS DE TELECOMMUNICATION ET DISPOSITIF PERMETTANT DE METTRE EN OEUVRE CE PROCÉDÉ

(30) Priorität: 29.03.2004 DE 102004015268
(43) Veröffentlichungstag der Anmeldung: 13.12.2006
(73) Patentinhaber: Nokia Solutions and Networks GmbH & Co. KG, 81541 Munich (DE)
(72) Erfinder: DIETERICH, Hartmut, 81827 München (DE); LIPKA, Michael, 80687 München (DE); NIEDERMEIER, Christoph, 80999 München (DE); WIEDEMANN, Wiebke, 60486 Frankfurt am Main (DE)
(74) Vertreter: Weidel, Gottfried
(86) Internationale Anmeldenummer: PCT/EP2005/050184
(87) Internationale Veröffentlichungsnummer: WO 2005/094032

(56) Entgegenhaltungen:
- WO-A-02/093959
- US-A1- 2002 044 634
- JONATHAN ROSENBERG, ET AL.: "An XML Format for Presence Buddy Lists, draft-rosenberg-impp-buddylist-00.txt" INTERNET ENGINEERING TASK FORCE, [Online] 15. Juni 2000 (2000-06-15), Seiten 1-10, XP002328158 IMPP WG Gefunden im Internet: URL:http://www.watersprings.org/pub/id/dra ft-rosenberg-impp-buddylist-00.txt> [gefunden am 2005-05-12] in der Anmeldung erwähnt
- 3GPP: "3rd Generation Partnership Project; Technical Specification Group Services and System Aspects; Presence Service; Architecture and functional description (Release 6)" 3GPP: TS 23.141 V6.3.0, [Online] Juni 2003 (2003-06), Seiten 1-35, XP002328156 Gefunden im Internet: URL:http://3GPP.org/specs/numbering.htm> [gefunden am 2005-05-12] in der Anmeldung erwähnt
- 3GPP: "3rd Generation Partnership Project; Technical Specification Group Services and System Aspects; Presence Service; Stage 1 (Release 6)" 3GPP TS 22.141 V6.2.0, [Online] März 2003 (2003-03), Seiten 1-24, XP002328157 Gefunden im Internet: URL:http://3GPP.org/specs/numbering.htm> [gefunden am 2005-05-12] in der Anmeldung erwähnt
- THE WIRELESS VILLAGE INITIATIVE: "WIRELESS VILLAGE THE MOBILE IMPS INITIATIVE, SYSTEM ARCHITECTURE MODEL VERSION 1.0 (WV-001)" ERICSSON, MOTOROLA, NOKIA, 12. Februar 2002 (2002-02-12), XP002318457

## Beschreibung

### Fachgebiet der Erfindung

Die Erfindung betrifft ein Verfahren zur Verwaltung von sogenannten Präsenz- oder auch Kontenxt-Informationen von Teilnehmern in einem Telekommunikationsnetz, sowie eine Vorrichtung zur Durchführung des Verfahrens.

Zur Durchführung von Telekommunikationsdiensten ist es häufig vorteilhaft, wenn bestimmte Informationen des Benutzers zur Verfügung stehen. Diese Informationen umfassen neben dem Aufenthaltsort des Benutzers auch seine Verfügbarkeit, die Art der benutzten Endgeräte, die Erreichbarkeit über bestimmte Endgeräte oder auch sein Aufenthaltsort. Günstigerweise sind diese Informationen zentral im Telekommunikationsnetz hinterlegt, um von verschiedensten Anwendungen und anderen Teilnehmern zugreifbar zu sein.

In der Standardisierung wurde dieses Problem bereits erkannt. So existieren verschiedene Standards, die sich der Architektur, der Funktionen und anderer Probleme annehmen. So sei genannt der RFC Request for Comments 2778 der Network Working Group IETF, für das Internet. Korrespondierend existieren für das Mobilfunknetz 3GPP-Standards, nämlich der 3GPP TS 23.141, "Technical Specification Group Services and System Aspects; Presence-Service; Architecture and Functional Description" (Release 6), Version 6.3.0. von 2003, sowie 3GPP TS 22.141 "Presence-Service; Stage 1" (Release 6), Version 6.2.0. von März 2003.

Mittels eines Präsenz-Servers werden Eigenschaften von ausgewählten Kommunikationsteilnehmern gesammelt und können von anderen Teilnehmern und Applikationen abgefragt werden. Es ist eine Menge von möglichen Präsenz-Daten bereits in den Standards beschrieben, diese ist jedoch nicht abschließend. Es ist zu erwarten, dass mit weitergehenden Endgeräten und Applikation auch weitere Präsenz-Daten aufgenommen werden können.

Ziel dieser Präsenz-Daten, in den Standards auch "Presentity" genannt, ist es, anderen Teilnehmern Informationen über die Verfügbarkeit bestimmter Teilnehmer oder Applikationen zu übermitteln. Um dies zu erreichen, können überwachende Teilnehmer, sogenannte "Watcher" installieren, die den Status der Präsenz-Daten eines Teilnehmers überwachen, indem sie ihn entweder regelmäßig abfragen oder eine Nachricht erhalten, wenn sich ein bestimmter Präsenz-Status ändert.

Eine häufige Anwendung dieser Präsenz-Informationen besteht in gegenseitiger Information einer Gruppe von Teilnehmern über den jeweiligen Erreichbarkeitsstatus der anderen Gruppenmitglieder. Hierzu ist bereits bekannt, die sogenannte "Buddy-List", die eine Sammlung von Presentities verschiedener Teilnehmer ist, an denen der Subscriber interessiert ist. Üblicherweise wird diese Buddy-List beim Teilnehmer selber verwaltet. Zu Beginn des Aufbaus der Verbindung sendet er eine Subscribe-Forderung an jeden einzelnen Buddy. Danach wird er jedesmal informiert, wenn sich bei einem der Teilnehmer seiner Buddy-List ein Status ändert.

Nachteil dieses Vorgehens ist, dass vor allem bei großen Buddy-Lists jede Menge Datenverkehr erzeugt wird, nämlich pro Teilnehmer eine Subscribe-Message und bei jeder Statusänderung eine Informations-Message. Vorausgesetzt, der Teilnehmer wird nicht automatisch durch eine Statusänderung informiert, so ist er selber dafür verantwortlich, die aktuellen Wert jedes einzelnen Buddy abzufragen. Dies bedeutet für ihn großen Aufwand, sowie zusätzlichen Datentransfer. Da er jede einzelne Abfrage auch auswerten muss, wird bei längeren Buddy-Lists das Intervall der Abfragen länger werden, dadurch ist der Aktualitätszustand der Informationen nicht mehr gewährleistet.

### Stand der Technik

Dokument WO 02093959 offenbart ein Verfahren zum Verwalten von Präsenzdaten in einem Präsenz-Server in einem Telekommunikationsnetz, bei dem mindestens zwei Telekommunikationsteilnehmer eine Gruppe bilden und jeder Teilnehmer, der dieser Gruppe zugeordnet ist, eigene Teilnehmer Präsenzdaten hat. Jeder Teilnehmer kann eine oder mehrere Gruppen erzeugen und managen, wobei jede solche Gruppe eine Auswahl an anderen Teilnehmer beinhaltet, die auf für die Gruppe vorgegebene bestimmte Präsenz-Daten des Gruppeneigentümers zugreifen können. Die Daten, die die Gruppe darstellen, beinhalten eine Auflistung der Mitglieder und verschiedene Attribute, die die Zugriffsrechte der Mitglieder definieren, und weist folglich eine andere Struktur auf als die Präsenz-Daten für einen einzelnen Teilnehmer.

In dem Internet-Draft Draft-Rosenberg-Sinmple-Buddy-List-Package-00.txt, wird eine Buddy-List beschrieben. Dieses Dokument lag der IETF für ein halbes Jahr, nämlich ab dem 14.November 2001, zur Bewertung zu. Es wurde nicht zu einem RFC und daher ist es im Mai 2002 abgelaufen ("expired").

In dem Dokument wird eine sogenannter Buddy-List Subscription-Server BLSS vorgeschlagen. Dieser entspricht einem Presence-Agent für die Buddy-Liste selber. Das bedeutet, er kann sich die Buddy-Liste vom Teilnehmer besorgen. Danach übernimmt er die Kommunikation mit dem Präsenz-Server, sammelt dort alle Informationen über die Teilnehmer der Buddy-Liste. Sobald alle Informationen gesammelt sind, leitet er diese gemeinsam an den Teilnehmer weiter.

Aufgabe der Erfindung ist es, ein Verfahren anzugeben, wie Kontext-Daten ausgewählter Kommunikationsteilnehmer einer Buddy-Liste zu einer Kontext-Information für die Gruppe verknüpft werden. Weiterhin ist Aufgabe der Erfindung, eine Vorrichtung zur Durchführung des Verfahrens anzugeben.

### Darstellung der Erfindung

Diese Aufgabe wird gelöst durch ein Verfahren gemäß den Merkmalen des Anspruchs 1, sowie durch eine Vorrichtung gemäß den Merkmalen des Patentanspruchs 6.

Kernidee der Erfindung ist es, im Präsenz-Server selber einen sogenannten virtuellen Gruppen-Buddy anzulegen. Dies bedeutet, dass eine zusätzliche Präsenz-Information für einen virtuellen Teilnehmer generiert wird, der nicht im Netz existiert, sondern die Liste der in der Gruppe existierenden Teilnehmer zusammenfasst. Diese Präsenz-Information wird generiert aus den jeweiligen korrespondierenden Teilnehmerpräsenz-Daten eines jeden Gruppenteilnehmers.

Vorteil der Erfindung ist, dass die Verknüpfung der einzelnen Kontext-Präsenz-Daten der Teilnehmer nicht vom abfragenden Teilnehmer durchgeführt werden muss, wofür möglicherweise zusätzliche Rechenleistung in seinem Endgerät erforderlich ist. Weiterhin ist es vorteilhaft, dass der Teilnehmer nicht jeden einzelnen Gruppen-Buddy aus seiner Gruppe einzeln abfragen muss. Dadurch wird unnötig viel Datenverkehr über die Luftschnittstelle, sowie redundante Verknüpfung der Kontext-Information vermieden.
Die wesentliche Idee liegt daher in der Übertragung des individuellen Teilnehmerkontexts eines einzelnen Mobilfunkteilnehmers in einem sogenannten Gruppen-Kontext, der die Gesamtheit von Teilnehmern widerspiegelt.

Vorteilhafte Ausgestaltungen und Weiterbildungen sind in den Unteransprüchen angegeben.

Bei der Generierung der Gruppenpräsenz-Daten können verschiedene Regeln angewendet werden. Beispielhaft sollen hier einige aufgezählt werden. Es ist zum Beispiel denkbar, dass ein Parameter einen gewissen Wert nur annehmen kann, wenn alle Teilnehmer dieser Gruppe diesen Wert bereits gesetzt haben. Vorstellbar ist diese Feature beispielsweise bei dem Ortsinformation, wo eine Ortsinformation der Gruppe nur sinnvoll ist, wenn sich alle Teilnehmer der Gruppe im Wesentlichen am selben Ort aufhalten.
In abgeschwächter Form kann es auch sein, dass ein bestimmter Präsenz-Wert der Gruppe dann auf einen Wert gesetzt wird, wenn ein vorbestimmter Prozentsatz der Gruppe diesen Wert aufweist, beispielsweise 50%. Das andere Extrem wäre es, dass ein entsprechender Gruppenpräsenz-Wert dann schon auf einen bestimmten Wert gesetzt wird, wenn mindestens einer der korrespondierenden Gruppenteilnehmer diesen Präsenz-Datenwert hat.

Es ist auch vorstellbar, dass ein bestimmter Gruppen-Präsenz-Datenwert genau den Durchschnittswert aller korrespondierenden Teilnehmer-Präsenz-Datenwerte angibt.

Die Sammlung von Präsenz-Daten ist nur dann sinnvoll, wenn diese Präsenz-Daten auch an andere Teilnehmer des Netzes propagiert werden können. Dieses Konzept ist bereits in den Standards der 3GPP ausführlich beschrieben. Der Zugriff auf bestimmte Daten kann jedoch von den Nutzern eingeschränkt werden. So ist es in einem weiteren Ausführungsbeispiel der Erfindung möglich, den Zugriff der Kontext-Informationen der Gruppe nur freizugeben für die Gruppenmitglieder selber, für jeden anderen Teilnehmer oder Applikation ist der Zugriff gesperrt.
Eine Art der Information der Änderung von Gruppenpräsenz-Daten, ist die Benachrichtigung. Vorteilhafterweise werden bei der Änderung eines Wertes eines Gruppenpräsenz-Datums ausgewählte Teilnehmer der Gruppe darüber informiert. Alternativ ist es vorstellbar, dass eine dritte Person informiert wird, die nicht Teilnehmer der Gruppe ist.

### Kurzbeschreibung der Zeichnungen

Im Folgenden wird die Erfindung anhand von Ausführungsbeispielen erläutert. Dabei zeigen
Figur 1 ein Schemabild des erfindungsgemäßen Verfahrens,
Figur 2 ein Schemabild entsprechend Figur 1 nach Stand der Technik,
Figur 3 ein Ausführungsbeispiel,
Figur 4 die Architektur des Presence-Service gemäß dem Standard TS 23.141 mit Ergänzung,
Figur 5 eine erfindungsgemäße Vorrichtung.

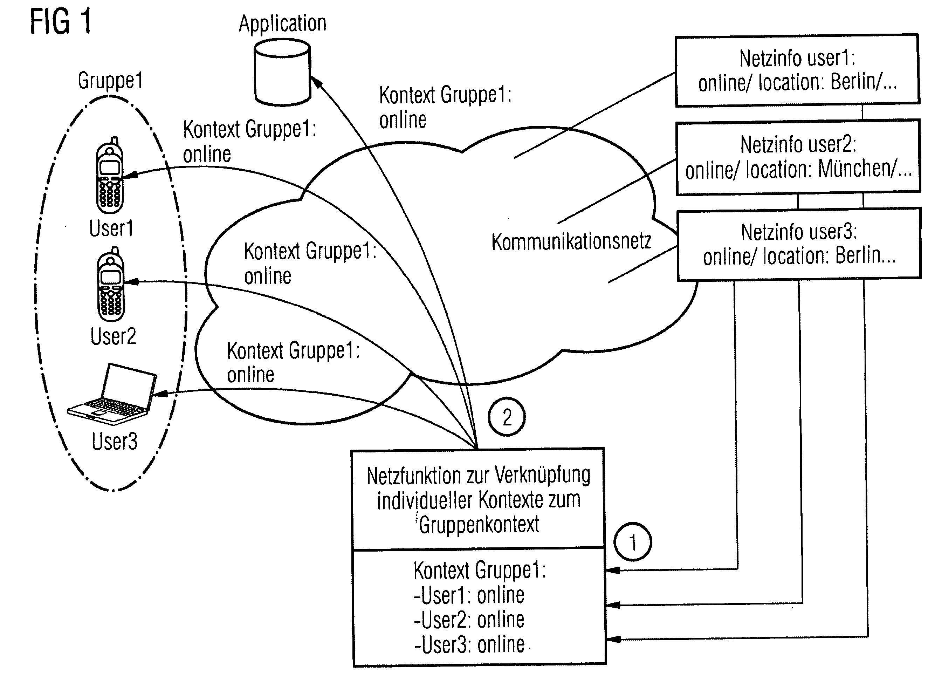

Figur 1 zeigt die wesentliche Architektur der Erfindung. In einem Kommunikationsnetz sind mehrere Teilnehmer, User1, U-ser2, User3, mit verschiedenen Endgeräten, wie Mobilfunktelefonen oder Laptops, beispielsweise mit WLAN-Anschluss im Netz angemeldet. Jeder dieser Teilnehmer besitzt eine eigene Präsenz-Information in dem Netz, Netzinfo User1, User2, User3. Ein wesentlicher Bestandteil dieser Präsenz-Information ist der Aufenthaltsort, location, des Benutzers in diesem Kommunikationsnetz. In dem vorliegenden Fall befinden sich Benutzer 1 und Benutzer 3 in Berlin, wohingegen Benutzer 2 sich derzeit in München aufhält.

In einem ersten Schritt wird nun aus den Präsenz-Informationen der drei Einzelteilnehmer eine gemeinsame Präsenz-Information der Gruppe 1 erstellt, Kontext Gruppe 1. Dieses erfolgt mittels einer Funktion, die die individuellen Kontexte zu einem Gruppen-Kontext verknüpft.

Im vorliegenden Fall haben die Teilnehmer eine Gemeinsamkeit, sie sind alle im Netz "online". Eine Regel zur Bildung des Gruppen-Kontext könnte hier also lauten: Setze den Status "online", wenn der Status aller Teilnehmer der Gruppe gleich "online". Für die Besetzung des Gruppenkontext zum Aufenthaltsort können andere Regeln gelten. Dieser Gruppenkontext ist vom Aufbau identisch zu einem Teilnehmer-Kontext, es handelt sich also im Wesentlichen um einen "virtuellen" Teilnehmer.

Soll der Kontext der Gruppe nun beispielsweise von einem Teilnehmer der Gruppe abgefragt werden oder auch von einer Applikation, die die Information zur Bereitstellung eines Dienstes benötigt, so kann diese einfach aus dem Netz von dem Gruppen-Kontext erfragt werden.

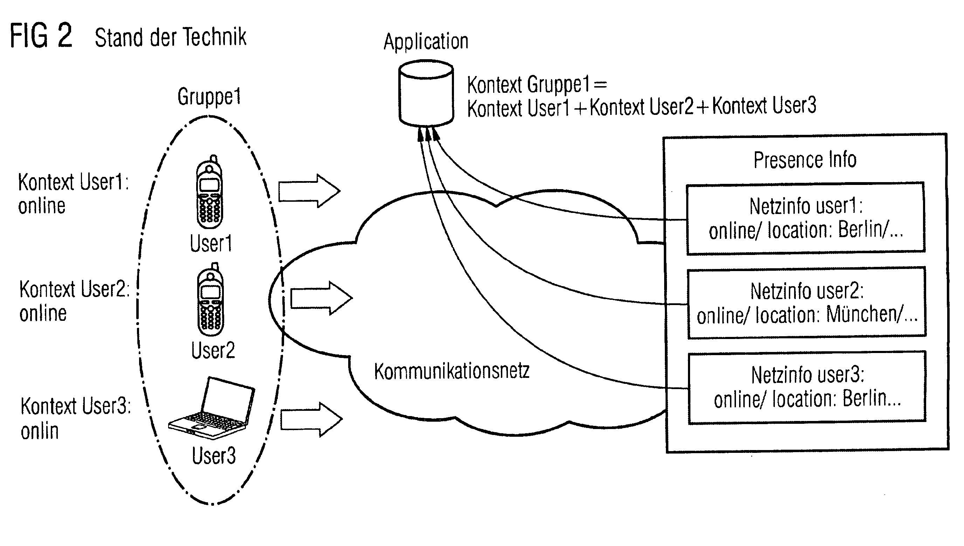

Die Figur 2 zeigt denselben Ablauf, wie er derzeit den Stand der Technik bildet. Es existiert wieder eine Präsenz-Information für jeden einzelnen Teilnehmer. Diese Präsenz-Informationen sind zentral im Präsenz-Server im Netz abgelegt. Wenn nun eine Applikation im Netz den Kontext der Gruppe haben möchte, muss er über das Netz jede einzelne Teilnehmer-Präsenz-Information separat abfragen. Die Verknüpfung der Präsenz-Information muss dann in der Applikation erfolgen.

Dies führt zu einem erheblichen Kommunikationsaufwand, sowie zu einem Entwicklungsaufwand in den Applikationen, da die Auswertung der Kontext-Information in jeder Applikation oder bei jedem Teilnehmer separat erfolgen muss. Weiterhin ist es ein Vorteil der erfindungsgemäßen Vorgehensweise, dass die Abstraktion der einzelnen Teilnehmer-Kontext-Information zu einer Gruppen-Kontext-Information unter einheitlichen Regeln geschehen kann.

In einem ersten Ausführungsbeispiel ist der Kontext-Manager als zusätzliche Funktion in einem im Netz residierenden Präsenz-Manager integriert. Für Anwendungen, bei denen ein Voting vorgenommen wird, das heißt, Informationen abstimmungsfähig generiert werden, ist es Voraussetzung, dass die für die Abstimmung erforderliche Anzahl von Gruppenmitgliedern "online" und abstimmungsbereit ist. Sobald diese Voraussetzung erfüllt ist, wird eine Benachrichtigung an die Teilnehmer verschickt.

Ähnlich könnte der "Mood"-Kontext einer Freundesgruppe, das heißt, alle sind guter Laune und unternehmenslustig, an eine Applikation für Kinowerbung propagiert werden, welche daraufhin aktuelle Kinotrailer an die Gruppe verschickt.

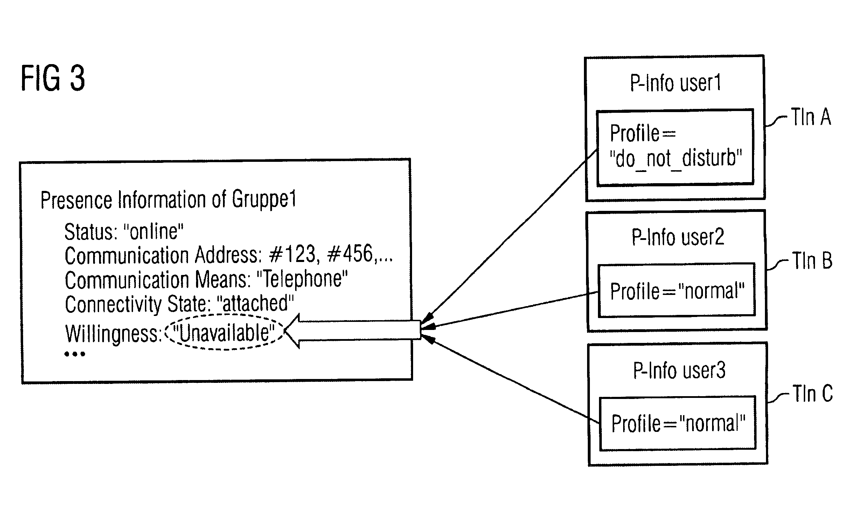

In Figur 3 wird dargestellt, wie aus drei Teilnehmer-Präsenz- Daten ein Gruppen-Kontext erzeugt wird. Wir haben wieder die drei Teilnehmer aus den Figuren 1 und 2, diese haben jeweils ein Profil erzeugt. Teilnehmer A hat derzeit eine Abwesenheitskennung gesetzt. Wenn nun die Regel lautet, dass der Kontext-Wert "Willingness", also "Erreichbarkeit", auf "Available", also "erreichbar" gesetzt wird, unter der Voraussetzung, dass tatsächlich alle Teilnehmer der Gruppe erreichbar sind, so wird in dem Fall der in Figur 3 beschrieben wird, der Wert auf "Unavailable" gesetzt, da Teilnehmer A in seiner Presence-Information den Wert "Do not Disturb" eingetragen hat. Die Regel könnte aber auch lauten, dass der Wert auf "a-vailable" gesetzt wird, sobald mehr als 50% der Gruppe erreichbar sind.

In einem zweiten Ausführungsbeispiel kann der Gruppen-Kontext vom Kontext-Manager auch aus Sicht eines bestimmten Endgerätes erzeugt und allen Gruppenmitgliedern zur Verfügung gestellt werden. Beispielsweise erfolgt eine Auswertung von Ortsinformation aller Endgeräte, die sich in der gleichen Mobilfunkzelle wie ein Referenzendgerät befinden. Aus der Bestimmung der Dichte und der Durchschnittsgeschwindigkeit wird die Staugefahr auf einem ausgewählten Autobahnausschnitt in dieser Mobilfunkzelle berechnet. Das Ergebnis wird dann allen Gruppenmitgliedern zur Verfügung gestellt.

In einem weiteren Anwendungsfall handelt es sich bei den Gruppenmitgliedern um Personen, die zu einem Call-Center gehören. Hier wird nun vom Kontext-Manager überwacht, wieviele Teilnehmer der Gruppe sich derzeit "online" befinden. Überschreitet der Anteil der als "busy" gekennzeichneten Teilnehmer einen bestimmten Prozentsatz, beispielsweise 80%, so wird dieser Gruppen-Kontext gemeldet, um daraus folgende Kapazitäts-Engpässe des Call-Centers anzuzeigen. Auf diese Meldung kann entsprechend reagiert werden, beispielsweise durch Hinzunahme weiterer Teilnehmer in diese Gruppe.

Ein weiteres vorteilhaftes Anwendungsgebiet ist das sogenannte "Intelligent Home". Hierbei handelt es sich bei den Teilnehmern einer Gruppe nicht um Personen, sondern um Gegenstände, zum Beispiel Milchtüten. Durch die Überwachung der Kontext-Information dieser Gegenstände, also Anzahl der vorhandenen Tüten, Verfallsdatum, Umgebungstemperatur (beispielsweise zu hoch, also Kühlschrankeffekt), kann der Kontext-Manager eine Auswertung machen. Ziel der Auswertung ist es, dem Besitzer des Kühlschranks eine Nachricht zu schicken, wenn der Milchvorrat sich dem Ende neigt und neue Milch gekauft werden muss.

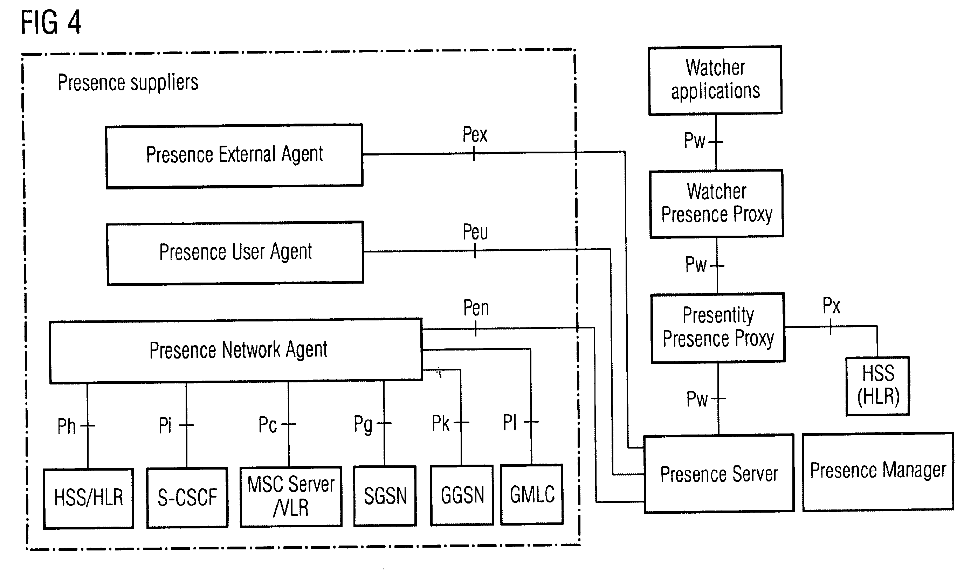

Die Figur 4 zeigt im Wesentlichen die Architektur, wie sie durch den Standard 3GPP TS 23.141 vorgegeben ist. Hinzugefügt wurde ein sogenannter Presence-Manager, der Zugriff hat auf die Präsenz-Informationen, die im Presence-Server abgelegt sind. Der linke Kasten (Presence Supplier) zeigt die Quellen an, von denen der Presence-Server seine Präsenz-Information erhält, nämlich vom Benutzer selber, von weiteren Anwendungen oder aus dem Netz. Als zugrundeliegendes Netz kann jedes derzeit vorstellbare Telekommunikationsnetz verwendet werden, beispielsweise GSM, UMTS, WLAN usw. Die Überwacher (Watcher) sorgen dafür dass die im Presence-Server gesammelte Information an die Teilnehmer und Applikationen des Netzes in geeigneter Weise weitergeleitet werden. Die genaueren Anwendungen entnimmt der Fachmann dem genannten Standard.

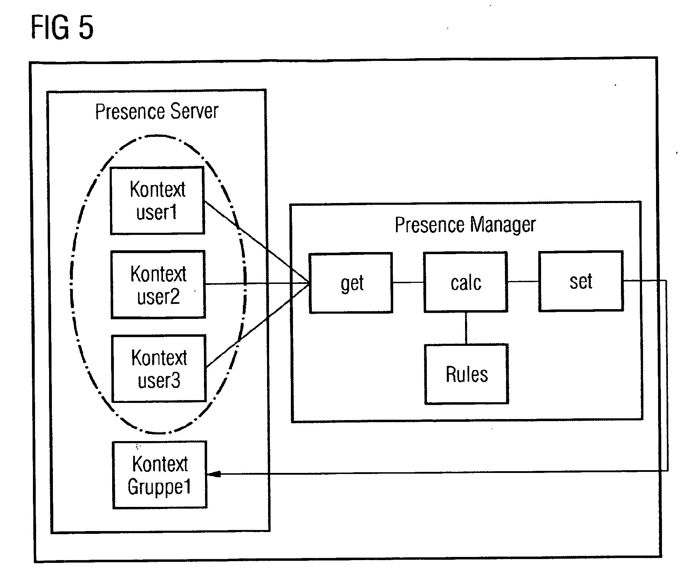

Die Figur 5 zeigt nun noch einen grundsätzlichen Aufbau des Presence-Managers, wenn er im Netz vorhanden ist. Der Teilnehmer-Kontext, Kontext User1, User2, wird vom Presence-Manager ermittelt. Mittels geeigneter Regeln, Rules, beispielsweise Minimum, Maximum, Durchschnitt, bestimmter Prozentsatz usw., wird dann der zugehörige Gruppen-Kontext ermittelt, CALC. Der ermittelte Gruppen-Kontext wird dann an den Presence-Server gemeldet, dieser setzt dann in dem Kontext der Gruppe (Kontext-Gruppe 1) den entsprechenden Wert wie berechnet. Der Gruppen-Kontext wird in dem Presence-Server genauso behandelt, wie jeder beliebige Einzelteilnehmer-Kontext.

## Patentansprüche

1. Verfahren zum Verwalten von Präsenzdaten (Presence Info) in einem Präsenz-Server in einem Telekommunikationsnetz (Kommunikationsnetz), bei dem
- mindestens zwei Telekommunikationsteilnehmer (user1, user2, user3) eine Gruppe (Gruppe1) bilden, und
- jeder Teilnehmer, der dieser Gruppe (Gruppe1) zugeordnet ist, eigene Teilnehmer-Präsenzdaten (Netzinfo user 1, Netzinfo user2,...) hat und
- bezüglich der Präsenzdaten für die Gruppe ein Eintrag (Kontext Gruppe1) für einen virtuellen Teilnehmer, der die Gruppe repräsentiert, in einer Präsenz-Datenbank existiert, und
- aus den zugehörigen Teilnehmer-Präsenzdaten (Netzinfo user 1, Netzinfo user2,...) der Wert eines Präsenzdatums des die Gruppe repräsentierenden virtuellen Teilnehmers gemäß vorbestimmten Regeln durch einen mit dem Präsenz-Server verbundenen Präsenz-Manager ermittelt und in der Präsenz-Datenbank entsprechend gesetzt wird.

2. Verfahren nach Patentanspruch 1, **dadurch gekennzeichnet, dass** ein Parameter der Gruppen-Präsenzdaten (Kontext Gruppe1) gemäß den Regeln auf einen Wert gesetzt werden darf, wenn
- alle korrespondierenden Teilnehmer-Präsenzdaten (Netzinfo user 1, Netzinfo user2,...) diesen Wert haben, oder wenn
- mindestens ein vorbestimmter Prozentsatz der der Gruppe zugeordneten korrespondierenden Teilnehmer-Präsenzdaten diesen Wert aufweist, oder wenn
- mindestens einer der korrespondierenden TeilnehmerPräsenzdaten diesen Wert hat.

3. Verfahren nach Patentanspruch 1, **dadurch gekennzeichnet, dass** ein Parameter der Gruppen-Präsenzdaten (Kontext Gruppe1) gemäß den Regeln auf den errechneten Durchschnitts-Wert der entsprechenden Werte aller korrespondierenden Teilnehmer-Präsenzdaten der der Gruppe zugeordneten Teilnehmer gesetzt wird.

4. Verfahren nach einem der vorherigen Patentansprüche,
**dadurch gekennzeichnet, dass**
die Gruppen-Präsenzdaten (Kontext Gruppe1) nur für die der Gruppe (Gruppe1) zugeordneten Teilnehmer (user1, user2, user3) lesbar sind.

5. Verfahren nach einem der vorherigen Patentansprüche,
**dadurch gekennzeichnet, dass** bei Änderung eines GruppenPräsenzdaten Wertes eine Benachrichtigung erzeugt wird,
- an mindestens einen Teilnehmer der Gruppe oder
- an einen weiteren Teilnehmer außerhalb der Gruppe.

6. Vorrichtung zur Durchführung des Verfahrens nach einem der Patentansprüche 1 bis 5, mit
- Mitteln zum Sammeln (get) von korrespondierenden Teilnehmer-Präsenzdaten (Kontext user1, Kontext user2,..) der der Gruppe zugeordneten Teilnehmer,
- Mitteln zum Berechnen (calc) des zugehörigen Wertes für den Eintrag für den virtuellen Teilnehmer in der Gruppen-Präsenzdaten aus den gesammelten TeilnehmerPräsenzdaten, entsprechend den für die Berechnung der jeweiligen Präsenzdatenart definierten Regeln (Rules), und
- Mitteln zum Setzen (set) des neu ermittelten Präsenzdaten-Wertes in den Gruppen-Präsenzdaten (Kontext Gruppel).

## Claims

1. Method for managing presence data (presence info) in a presence server in a telecommunications network (communications network), in which
- at least two telecommunications subscribers (user1, user2, user3) form a group (groupl), and
- each subscriber who is associated with this group (group1) has individual subscriber presence data (network info user 1, network info user2,...), and
- with respect to the presence data for the group, an entry (context group1) exists in a presence database for a virtual subscriber who represents this group, and
- from the associated subscriber presence data (network info user 1, network info user2,...), the value of a piece of presence data of the virtual subscriber representing the group is ascertained via a presence manager connected with the presence server according to predetermined rules, and is correspondingly set in the presence database.

2. Method according to Patent Claim 1, **characterized in that**, according to the rules, a parameter of the group presence data (context group1) is allowed to be set to a value if
- all corresponding subscriber presence data (network info user 1, network info user2,...) have this value, or if
- at least a predetermined percentage of the corresponding subscriber presence data associated with the group has this value, or if
- at least one of the corresponding pieces of subscriber presence data has this value.

3. Method according to Patent Claim 1, **characterized in that**, according to the rules, a parameter of the group presence data (context group1) is set to the calculated average value of the corresponding values of all corresponding subscriber presence data of the subscribers associated with the group.

4. Method according to one of the preceding patent claims, **characterized in that**
the group presence data (context group1) are readable only for the subscribers (user1, user2, user3) associated with the group (groupl).

5. Method according to one of the preceding patent claims, **characterized in that** when a group presence data value is changed, a notification is generated
- to at least one subscriber in the group or
- to an additional subscriber outside the group.

6. Method for carrying out the method according to one of Patent Claims 1 to 5, including
- means for gathering (get) corresponding subscriber presence data (context user1, context user2,..) of the subscribers associated with the group,
- means for calculating (calc) the associated value for the entry for the virtual subscriber in the group presence data from the collected subscriber presence data, corresponding to the rules defined for the calculation of the respective type of presence data, and
- means for setting (set) the newly ascertained presence data value in the group presence data (context groupl).

## Revendications

1. Procédé pour gérer des données de présence (Presence Info) dans un serveur de présence dans un réseau de télécommunications (Kommunikationsnetz), selon lequel
- au moins deux abonnés de télécommunications (userl, user2, user3) forment un groupe (Gruppel) et
- chaque abonné associé à ce groupe (Gruppel) a ses propres données de présence d'abonné (Netzinfo user1, Netzinfo user2, ...) et
- concernant les données de présence du groupe, il existe un enregistrement (Kontext Gruppel) pour un abonné virtuel représentant le groupe dans une banque de données de présence, et
- à partir des données de présence d'abonné associées (Netzinfo user1, Netzinfo user2, ...), la valeur d'une donnée de présence de l'abonné virtuel représentant le groupe est déterminée selon des règles prédéfinies par un gestionnaire de présence relié au serveur de présence et réglée en conséquence dans la banque de données de présence.

2. Procédé selon la revendication 1, **caractérisé en ce qu'**un paramètre des données de présence du groupe (Kontext Gruppel) peut être réglé selon lesdites règles à une valeur, si
- toutes les données de présence d'abonné correspondantes (Netzinfo user1, Netzinfo user2, ...) présentent cette valeur, ou si
- au moins un pourcentage prédéterminé des données de présence d'abonné correspondantes associées au groupe présente cette valeur, ou si
- au moins une des données de présence d'abonné correspondantes présente cette valeur.

3. Procédé selon la revendication 1, **caractérisé en ce qu'**un paramètre des données de présence du groupe (Kontext Gruppel) est réglée selon lesdites règles à la valeur moyenne calculée des valeurs respectives de toutes les données de présence correspondantes des abonnés associés au groupe.

4. Procédé selon l'une des revendications précédentes, **caractérisé en ce que** les données de présence du groupe (Kontext Gruppel) ne sont lisibles que pour les abonnés (userl, user2, user3) associés au groupe (Gruppel).

5. Procédé selon l'une des revendications précédentes, **caractérisé en ce qu'**en cas de changement d'une valeur des données de présence du groupe une notification est générée,
- à destination d'au moins un abonné du groupe ou
- à destination d'un autre abonné hors du groupe.

6. Dispositif pour la mise en oeuvre du procédé selon l'une des revendications 1 à 5, comprenant
- des moyens pour collecter (get) des données de présence correspondantes (Kontext user1, Kontext user2, ...) des abonnés associés au groupe,
- des moyens pour calculer (calc) la valeur associée pour l'enregistrement pour l'abonné virtuel dans les données de présence du groupe, à partir des données de présence d'abonnés collectionnées, selon les règles (rules) définies pour le calcul du type de données de présence respectif, et
- des moyens pour régler (set) la nouvelle valeur des données de présence dans les données de présence du groupe (Kontext Gruppel).
